# EUROPEAN PATENT APPLICATION

(11) **EP 2 672 343 A1**
(43) Date of publication of application: **11.12.2013**
(21) Application number: 11857449.0
(22) Date of filing: 31.01.2011
(51) Int. Cl.: G05B 19/05, B25J 19/06, G05B 9/02, G05B 15/02, G06F 1/32, G06F 9/48

(54) **SAFETY CONTROL DEVICE AND SAFETY CONTROL METHOD**

(71) Applicant: TOYOTA JIDOSHA KABUSHIKI KAISHA, Toyota-shi, Aichi-ken, 471-8571 (JP)
(72) Inventor: TAIRA, Tetsuya, Toyota-shi Aichi 471-8571 (JP); BITOH, Hiroshi, Toyota-shi Aichi 4718571 (JP)
(74) Representative: Albutt, Anthony John
(86) International application number: PCT/JP2011/000528
(87) International publication number: WO 2012/104900

(57) **Abstract**

Suppression of power consumption is made possible by a microcontroller. An OS 100 includes, in part, a partition scheduler 21 that selects and determines a time partition to be scheduled next according to a scheduling pattern including the time partition for assigning execution time to a task. A processor periodically operates the partition scheduler 21 by executing the OS 100. The partition scheduler 21 reduces an operating frequency of a microcontroller 15 according to a proportion occupied by the execution time required by a task for execution in the time partition.

## Description

### Technical Field

The present invention relates to a safety control device mounted on a service robot, transport device, and the like for ensuring functional safety, and especially to a safety control device using a computer system.

### Background Art

Service robots need to ensure functional safety by constantly monitoring a safety state by an external sensor and a self-diagnostic device and executing appropriate safety control logic upon detecting some risk.

IEC 61508 has been established as an international standard regarding the functional safety targeted for the aforementioned service robot as well as the system that operates on electrical principles such as transport devices. In IEC 61508, a system provided for ensuring the functional safety is referred to as a safety-related system. IEC 61508 defines various techniques for building the safety-related system by hardware such as a microprocessor and a PLC (Programmable Logic Controller) and a computer program (software). The use of various techniques defined in IEC 61508 enables building the safety-related systems using the computer system.

On the other hand, the processing power of programmable electric devices such as a microprocessor is improving in recent years. Therefore, using a multitasking OS (Operating System) and parallel execution of various application programs on one computer system enables integration of computer systems for a plurality of usages mounted on the devices including the service robot and an automobile.

For example, Patent Literature 1 discloses a technique for causing an application program regarding to ensure the functional safety (hereinafter referred to as a safety-related application) to run on one computer system together with another application program (hereinafter referred to as a non-safety-related application).

Applying the technique defined in IEC 61508 to the entire software including the safety-related application and the non-safety-related application creates a need to apply the technique also to the non-safety-related application. Thus, there is a problem that software development cost increases.

Accordingly, in the technique disclosed in Patent Literature 1, the safety-related applications (a safety monitoring program and a safety control program) are made independent from the non-safety-related application (a normal control program) by time-partitioning a system program. This excludes the normal control program from the safety-related system and contributes to a reduction in the cost of the safety-related system that is configured using the computer system.

### Citation List

### Patent Literature

Patent Literature 1: Japanese Unexamined Patent Application Publication No. 2010-271759

### Summary of Invention

### Technical Problem

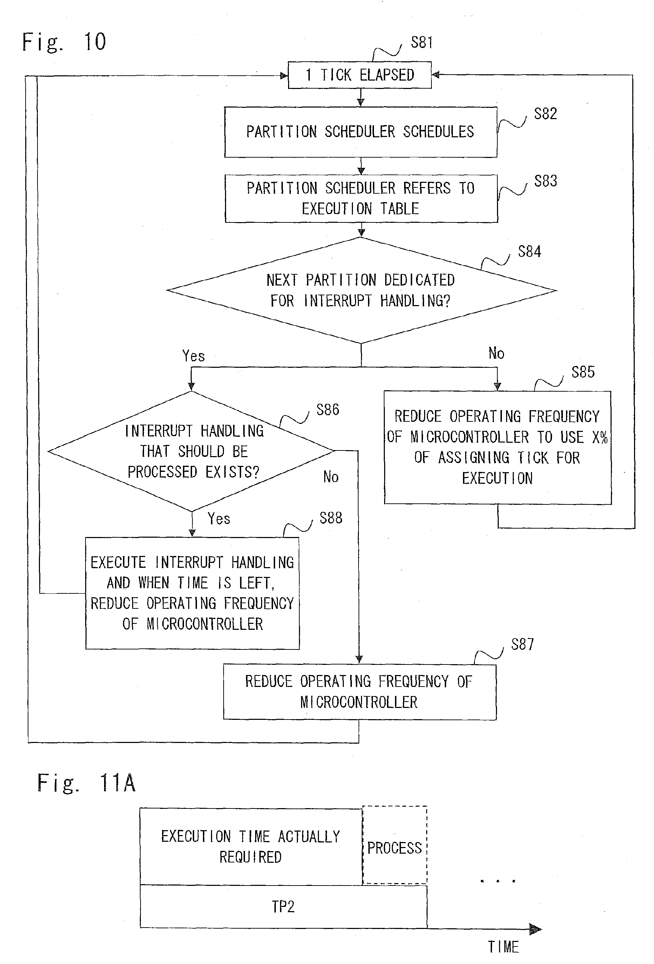

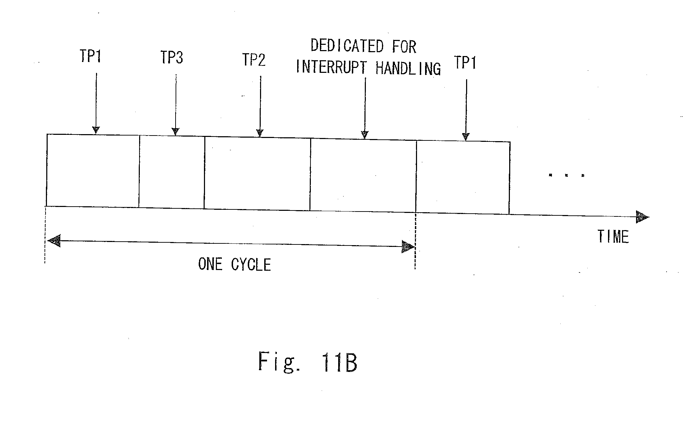

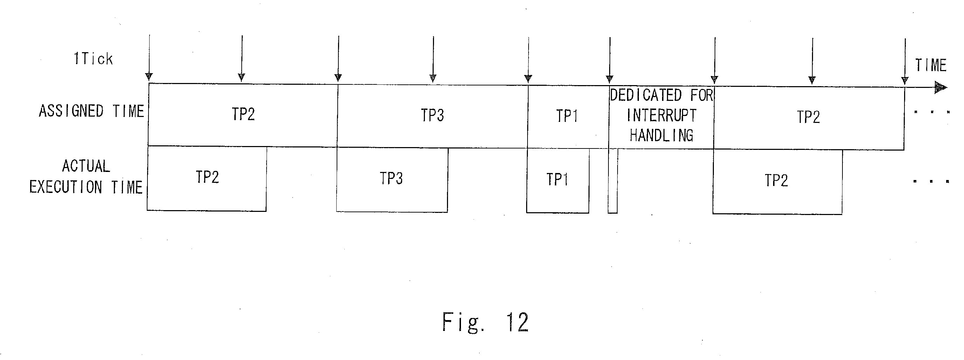

However, there is a problem explained below in the conventional technique including a time partitioning function. Hereinafter, the problem is explained using Figs. 11 and 12.

First, the problem is explained in detail using Fig. 11. As exemplified n Fig. 11A, in a conventional OS including the time partitioning function, the time actually required by a task executed in TP2 is usually shorter than the time partition TP2 assigned by the OS, and thus there is a problem that quite some execution time is left.

Moreover, as exemplified in Fig. 11B, it can be considered that a time partition dedicated for interrupt handling is provided in addition to the time partitions such as TP1 in order to exclusively execute the interrupt handling, however when no interrupt handling exist in such case, no process is executed in the time partition dedicated for interrupt handling. That is, as shown in Figs. 11A and 11B, when remaining time exists in TP or the time partition dedicated for interrupt handling exists, a microcontroller (including a processor) does not execute any process and power is wasted.

Next, the above problem is explained in more detail using Fig. 12. As exemplified in Fig. 12, in the conventional OS including the time partitioning function, the time to be assigned to each time partition can be supplied only in multiples of a predetermined timer period (unit of one Tick in the drawing). Therefore, a deviation arises between the time to be actually required in each time partition. However, even when no process is executed in the time partition, the microcontroller itself that operates the OS continues to constantly operate with the same degree of computing power as in the case of executing processes. That is, regardless of whether or not the processes are being executed in the time partition, the microcontroller constantly performs operations at a constant operating frequency. Therefore, the microcontroller constantly requires certain power consumption regardless of an execution state in the time partition.

The present invention is made based on the aforementioned findings and aims to provide a safety control device and a safety control method that enable suppression of power consumption by a microcontroller.

### Solution to Problem

A safety control device according to an aspect of the present invention includes a hardware resource including at least one processor and a system program that controls assignment of execution time of the processor to a program. The system program includes, in part, a partition scheduler that selects and determines a time partition to be scheduled next according to a scheduling pattern including the time partition for assigning the execution time to the program. The processor periodically operates the partition scheduler by executing the system program. The partition scheduler reduces an operating frequency of the hardware resource according to a proportion occupied by the execution time required by the program for execution in the time partition.

According to the aforementioned aspect of the present invention, suppression of the power consumption by a hardware resource (microcontroller) can be realized.

Further, the system program includes, in part, an execution table that specifies beforehand for each time partition the proportion occupied by the execution time required by the program for execution in the time partition, and the partition scheduler may refer to the execution table to reduce the operating frequency of the hardware resource.

Furthermore, when the hardware resource is operated based the reduced operating frequency, the partition scheduler may reduce the operating frequency of the hardware resource so that the execution time by the program falls within a predetermined proportion of the time assigned to the time partition.

Additionally, the scheduling pattern further includes a time partition dedicated for interrupt handling that assigns the execution time to a interrupt handling program, and the partition scheduler may select and determine the time partition to be scheduled next according to the scheduling pattern including the time partition dedicated for interrupt handling and may not change the operating frequency of the hardware resource when the interrupt handling program is executed in the time partition dedicated for interrupt handling.

Moreover, the partition scheduler may reduce the operating frequency of the hardware resource when the execution of the interrupt handling program in the time partition dedicated for interrupt handling is completed.

In addition, the scheduling pattern further includes a time partition dedicated for interrupt handling that assigns the execution time to a interrupt handling program, and the partition scheduler may select and determine the time partition to be scheduled next according to the scheduling pattern including the time partition dedicated for interrupt handling and may reduce the operating frequency of the hardware resource when the interrupt handling program is not executed in the time partition dedicated for interrupt handling.

Besides, the partition scheduler reduces the operating frequency of the hardware resource to a predetermined operating frequency.

### Advantageous Effects of Invention

According to the present invention, it is possible to provide a safety control device and a safety control method that enable suppression of power consumption by a microcontroller.

### Brief Description of Drawings

Fig. 1 is a block diagram showing a configuration example of a safety control device according to a first embodiment of the invention;
Fig. 2 is a diagram for explaining a concept of time partitioning according to the first embodiment of the invention;
Fig. 3 is a conceptual diagram for explaining the concept of resource partitioning according to the first embodiment of the invention;
Fig. 4 is a diagram showing a relationship between a partition scheduler and tasks that are activated in an execution environment provided by an OS shown in Fig. 1;
Fig. 5A is a diagram showing a specific example of a scheduling pattern;
Fig. 5B is a diagram showing a specific example of a scheduling pattern;
Fig. 6 is a flowchart showing a specific example of a procedure for the partition scheduler;
Fig. 7 is a flowchart showing a specific example of a reset procedure for a microcontroller;
Fig. 8 is a flowchart showing a specific example of the reset procedure for the microcontroller;
Fig. 9 is a diagram showing a specific example of an execution table;
Fig. 10 is a flowchart showing a specific example of the procedure of the partition scheduler;
Fig. 11A is a diagram for explaining an issue in the present invention;
Fig. 11B is a diagram for explaining an issue in the present invention; and
Fig. 12 is a diagram for explaining an issue in the present invention.

### Description of Embodiments

Hereinafter, specific embodiments incorporating the present invention are explained in detail with reference to the drawings. In each drawing, the same components are denoted by the same reference numerals, and repeated explanation is omitted as necessary for the clarity of the explanation.

### <First embodiment of the invention>

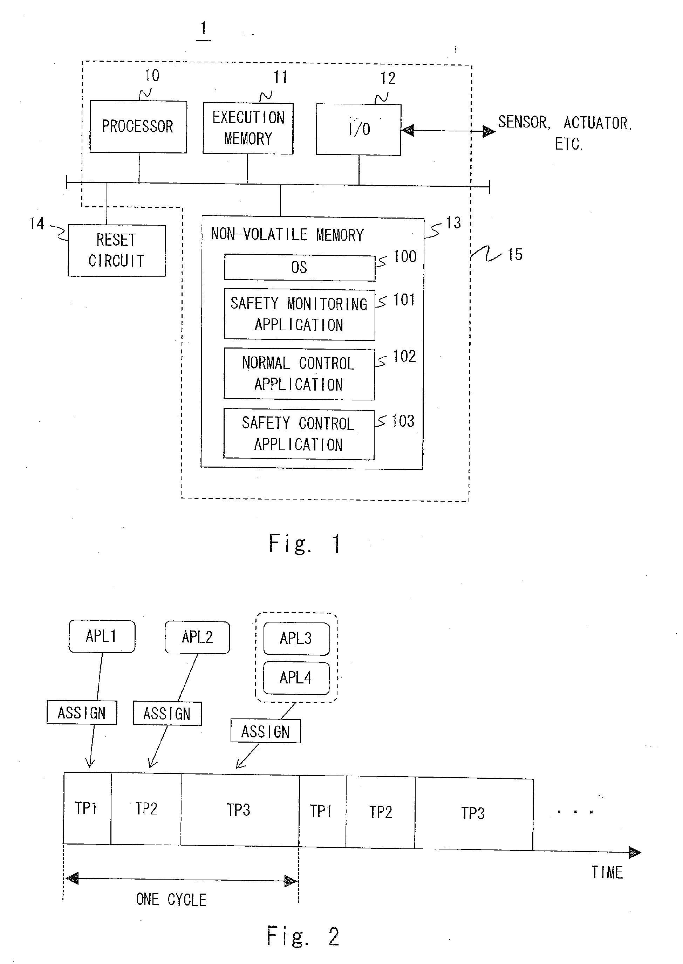

A safety control device 1 according to this embodiment is mounted on a service robot, a transport device, and the like and executes safety control for ensuring functional safety. The safety control device 1 is configured to execute a safety-related application and a non-safety-related application on the same computer system. Fig. 1 is a block diagram showing a configuration example of the safety control device 1 according to this embodiment.

A processor 10 fetches a program (an instruction stream), decodes the instruction and performs arithmetic processes according to the decoded result of the instruction. Note that although only one processor 10 is shown in Fig. 1, the safety control device 1 may have a multiprocessor configuration including a plurality of processors 10. Moreover, the processor 10 may be a multicore processor. The processor 10 executes an operating system (OS) 100 as a system program to thereby provide a multiprogramming environment. The multiprogramming environment indicates an environment in which as if a plurality of programs are executed in parallel by periodically switching and executing the plurality of programs or switching the program to be executed in response to a generation of an event.

The multiprogramming is sometimes referred to as a multiprocessing, multithreading, multitasking, and the like. A process, a thread, and a task mean a program unit that is executed in parallel in the multiprogramming environment. The multiprogramming environment included in the processor 10 of this embodiment may be a multiprocessing environment or a multithreading environment.

An execution memory 11 is a memory used by the processor 10 for executing the program. Programs (the OS 110, applications 101 to 103, and the like) loaded from a non-volatile memory 13 and input and output data and the like to and from the processor 10 are stored to the execution memory 11. Note that the processor 10 may directly execute these programs from the non-volatile memory 13 without loading the programs from the non-volatile memory 13 into the execution memory 11.

Specifically, the execution memory 11 may be a randomly accessible non-volatile memory such as SRAM (Static Random Access Memory) and DRAM (Dynamic Random Access Memory). The execution memory 11 in Fig. 1 indicates a logical unit. That is, the execution memory 11 may be a combination of a plurality of SRAM devices, a combination of a plurality of DRAM devices, or a combination of the SRAM device and the DRAM device.

An I/O Port 12 is used for data transmission and reception with an external device. When the safety control device 1 is mounted on the service robot, for example, the external device is a visual sensor that can measure obstacles around the service robot, an actuator for operating the service robot, and the like.

The non-volatile memory 13 is a memory device that can maintain storage contents more stably than the execution memory 11 without power supply. The non-volatile memory 13 is, for example, a ROM (Read Only Memory), a flash memory, a hard disk drive, an optical disk drive, or a combination thereof. The non-volatile memory 13 stores the OS 100 and the applications 101 to 103. Note that at least a part of the non-volatile memory 13 may be configured to be removable from the safety control device 1. For example, the memory storing the applications 101 to 103 may be removable. Moreover, at least a part of the non-volatile memory 13 may be disposed outside the safety control device 1.

The OS 100 is executed by the processor 10 so as to perform task management including task scheduling, interrupt management, time management, resource management, and inter-task synchronization and provide inter-task communication, for example, by using hardware resources such as the processor 10, the execution memory 11, and the non-volatile memory 13.

Further, the OS 100 includes a function to temporally and spatially protect the hardware resources in order to increase the independence of the safety monitoring application 101 and the safety control application 103, which relate to ensure the functional safety, from the normal control application 102. The hardware resources here include the processor 10, the execution memory 11, and the I/O port 12.

Among them, the temporal protection is performed by partitioning a temporal resource, which is the execution time of the processor 10. Specifically, the temporal protection is performed by partitioning the execution time of the processor 10 and assigning the task (the process or the thread) to each partition (referred to as a time partition). A scheduling function (a partition scheduler 21) of the OS 100 guarantees resource utilization including the execution time of the processor 10 to the task assigned to each time partition (hereinafter may be abbreviated as TP).

Fig. 2 is a conceptual diagram regarding the time partitioning. An example of Fig. 2 shows an example of partitioning predetermined one cycle time into three of TP1, TP2, and TP3. When one cycle time is assumed to be 100 Ticks, for example, the first 20 Ticks are defined as TP1, the middle 30 Ticks are defined as TP2, and the last 50 Ticks are defined as TP3.

Moreover, in the example of Fig. 2, a first application (APL1) to a fourth application (APL 4) are assigned to any of TP1 to TP3. The scheduling function (the partition scheduler 21) of the OS 100 selects and determines any of TP1 to TP3 to be activated according to the lapse of time. Then, the application assigned to the active TP is executed by the processor 10.

On the other hand, the spatial protection is performed by partitioning fixed resources including the execution memory 11 and the I/O port 12 and assigning the task to each partition (referred to as a resource partition). The scheduling function (the partition scheduler 21) of the OS 100 prohibits the task from accessing other resources exceeding previously assigned resource partition (hereinafter may be abbreviated as RP).

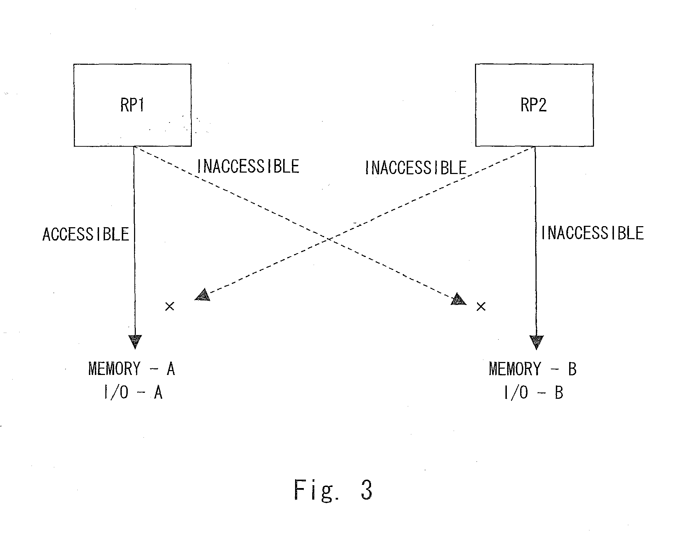

Fig. 3 is a conceptual diagram regarding the resource partitioning. An example of Fig. 3 shows two RPs (RP1 and RP2). A part of the execution memory 11 and the non-volatile memory 13 (A area) and a part of the I/O port 12 (port A) are assigned to RP1. Additionally, another part of the execution memory 11 and the non-volatile memory 13 (B area) and another part of the I/O port 12 are assigned to RP2. Access to the resource assigned to RP2 is prohibited from RP1 and access to the resource assigned to RP1 is prohibited from RP2.

Note that not all resources need to be exclusively assigned to any of RPs. That is, there may be a resource shared by the plurality of RPs. For example, when safety control is performed to the service robot, an actuator must be accessible from both of the normal control application 101 and the safety control application 102. Therefore, the RP to which the normal control application 101 belongs and the RP to which the safety control application 102 belongs may share an I/O port for controlling the actuator.

Returning to Fig. 1, the explanation is continued. The applications 101 to 103 are executed in the multiprogramming environment provided by the OS 100 and the processor 10. Among these, the safety monitoring application 101 includes instruction codes for causing the processor 10 to execute monitoring of an execution state of the normal control application 102, monitoring of the execution state of the safety control application 103, and monitoring of input and output data to and from the I/O port 12. Further, the safety monitoring application 101 includes instruction codes for causing the processor 10 to execute result notification to the partition scheduler 21. That is, the safety monitoring application 101 is the safety-related application.

Moreover, the normal control application 102 includes instruction codes for causing the processor 10 to execute a control procedure for making a control target such as the service robot to perform normal functions and operations. The normal control application 102 further includes instruction codes for causing the processor 10 to execute result notification to the partition scheduler 21. That is, the normal control application 102 is the non-safety-related application.

Further, the safety control application 103 includes instruction codes for causing the processor 10 to execute a control procedure defined for ensuring the functional safety corresponding to the case of detecting some abnormality. Furthermore, the safety control application 103 includes instruction codes for causing the processor 10 to execute the result notification to the partition scheduler 21. That is, the safety control application 103 is the safety-related application.

The reset circuit 14 resets a microcontroller 15 based on a signal from the OS 100. A reset mechanism for the microcontroller 15 using the reset circuit 14 is described later.

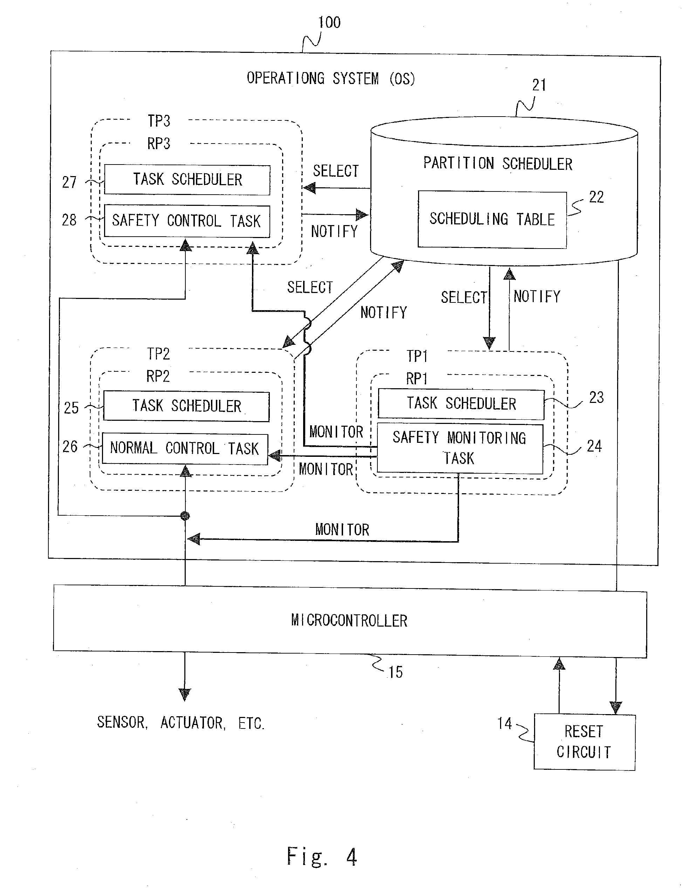

Hereinafter, a relationship between the partition scheduler 21 and the tasks generated by activating the applications 101 to 103 is explained using Fig. 4. Fig. 4 is a diagram showing a relationship between the partition scheduler 21 and tasks 24, 26, and 28 which are activated in the multiprogramming environment provided by the OS 100.

The microcontroller 15 includes the processor 10, the execution memory 11, the I/O port 12, and the non-volatile memory 13, for example. Note that although Fig. 4 illustrates the configuration of including the reset circuit 14 outside the microcontroller 15, a configuration including the reset circuit inside the microcontroller 15 may also be employed.

The microcontroller is supplied with a clock signal from an external clock source, and the processor 10 and the like operate in a predetermined timer period based on this clock signal. This embodiment is explained assuming that the predetermined timer period is one Tick. Accordingly, when the OS 100 is executed by the processor 10, the partition scheduler 21 operates by every Tick, and also in each TP, task schedulers 23, 25, and 27 and the tasks (the safety monitoring task 24, the normal control task 26, and the safety control task 28) operate by every Tick.

The partition scheduler 21 operates by every Tick and switches TPs (partition scheduling). The partition scheduler 21 selects and determines any of TP1 to TP3 to be activated in the next one Tick. Further, the partition scheduler 21 starts the operation of the task scheduler regarding the selected TP.

To explain in more detail about the partition scheduling by the partition scheduler 21, the partition scheduler 21 refers to a scheduling table 22 and performs partition scheduling according to a scheduling pattern with the TP setting defined.

The scheduling table 22 holds the scheduling patterns that specify switching orders and timings of TPs. Note that the scheduling table 22 holds at least two different scheduling patterns. One is a scheduling pattern applied when abnormality detection by the safety monitoring task 24 is not performed (i.e. during normal time). The other is a scheduling pattern applied when the abnormality is detected by the safety monitoring task 24. Hereinafter, the scheduling pattern applied during the normal time is referred to as a "normal control scheduling pattern". Moreover, the scheduling pattern applied at the abnormality detected time is referred to as a "safety control scheduling pattern".

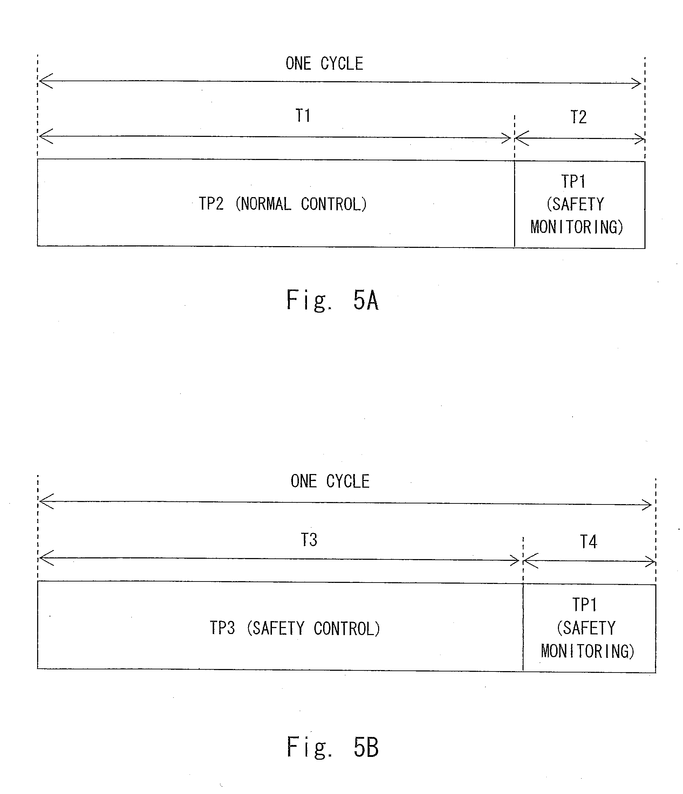

Fig. 5A shows a specific example of the normal control scheduling pattern. In Fig. 5A, TP2 to which the normal control task 26 belongs is assigned to the first half (T1) of one cycle time. Moreover, TP1 to which the safety monitoring task 24 belongs is assigned to the latter half of one cycle time (T2). According to the scheduling pattern of Fig. 5A, the normal control task 26 and the safety monitoring task 24 are repeatedly scheduled.

Fig. 5B shows a specific example of the safety control scheduling pattern. In Fig. 5B, TP3 to which the safety control task 28 belongs is assigned to the first half of one cycle time (T3). Moreover, TP1 to which the safety monitoring task 24 belongs is assigned to the second half of one cycle time (T4). According to the scheduling pattern of Fig. 5B, the safety control task 28 and the safety monitoring task 24 are repeatedly scheduled.

Returning to Fig. 4, the explanation is continued. The task schedulers 23, 25, and 27 schedule the tasks in TPs to which each of them belongs. Scheduling the task in each TP may apply typical priority-based scheduling. Note that although Fig. 4 illustrates that each TP includes only one task, one or more tasks are included in practice. For example, two tasks, which are a normal control task A and a normal control task B, may be included in TP2 for normal control.

The safety monitoring task 24 is a task generated by activating the safety monitoring application 101. In the example of Fig. 4, the safety monitoring task 24 is assigned to TP1 and RP 1 . The safety monitoring task 24 monitors the execution state of the normal control task 26, which is the non-safety-related application, monitors the execution state of the safety control task 28, which is the safety-related application, and monitors input and output data to and from the I/O port 12. The safety monitoring task 24 further notifies the partition scheduler 21 of the execution state of the task.

The normal control task 26 is a task generated by activating the normal control application 102. In the example of Fig. 4, the normal control task 26 is assigned to TP2 and RP2. The normal control task 26 performs control for causing the control target such as the service robot to perform normal functions and operations. The normal control task 26 further notifies the partition scheduler 21 of the execution state of the task.

The safety control task 28 is a task generated by activating the safety control application 103. In the example of Fig. 4, the safety control task 28 is assigned to TP3 and RP3. The safety control task 28 performs control defined to ensure the functional safety corresponding to the case of detecting some abnormality. The safety control task 28 further notifies the partition scheduler 21 of the execution state of the task. Note that various techniques can be employed as a specific configuration for notifying the result from each task to the partition 21. For example, the task can invoke a system call (a service call) of the OS 100 and notify the result to the partition scheduler through the OS 100. Alternatively, for example, assuming that a flag regarding the execution state of the task is stored to the execution memory 11, the task may set a value of the flag according to the execution state thereof, and the partition scheduler 21 may evaluate the execution state of the task according to the set value of the flag.

As mentioned above, the partition scheduler 21 operates by every Tick and selects and determines any of TP1 to TP3 to be activated. Further, the partition scheduler 21 starts the operation of the task scheduler regarding the selected TP. Then, when the task schedulers 23, 25, and 27 start the operation, task scheduling is performed, and the processor 10 executes the tasks in TPs according to the order scheduled by the task schedulers 23, 25 and 27. Thus, the application assigned to the active TP is executed by the processor 10.

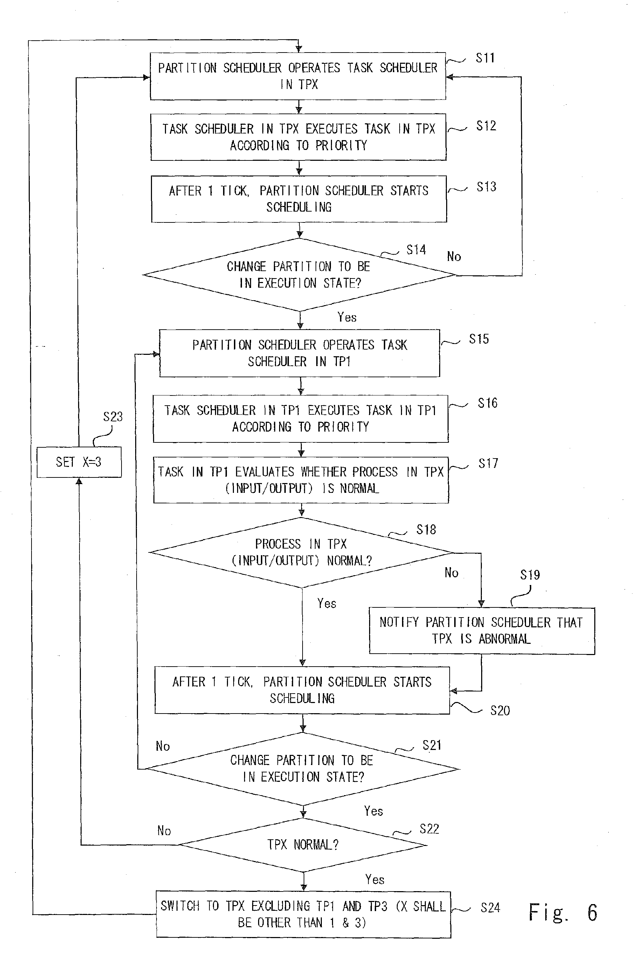

Subsequently, the partition scheduling by the partition scheduler 21 is explained using Fig. 6. Fig. 6 is a flowchart showing a specific example of the procedure of the partition scheduler 21. Note that Fig. 6 explains an example with a case when the scheduling is executed according to the normal control scheduling pattern (for example Fig. 5A) or the safety control scheduling pattern (for example Fig. 5B). That is, an example is explained with a case when the next TP following TP2 or TP3 is TP1, and further, when an abnormality in TP2 is detected in TP1, TP to be selected and determined next in response to the result from TP1 is TP3.

First, the partition scheduler 21 that operates by every Tick causes the task scheduler of TPX to operate (S11). A variable X here indicates the number of TP and X shall be a value other than 1. That is, in S11, either TP2 or TP3 excluding TP1 for safety monitoring is caused to operate.

The task scheduler of TPX which started the operation in S11 executes tasks in TPX according to a priority (S12). Then, after a lapse of one Tick, the partition scheduler 21 starts scheduling TPs (S13). That is, the partition scheduler 21 selects and determines any of TPs to be activated in the next one Tick according to the scheduling pattern.

When TP to be activated next is not changed (No in S 14), the partition scheduler 21 returns to S11 and continues the operation for the same TPX. For this reason, the processes from S11 to S 14 are repeated till a switching timing of TPX.

When TP to be activated next is changed (Yes in S14), the partition scheduler 21 causes the task scheduler in the time partition to be changed to operate (S15). The task scheduler in TP1 is caused to operate here. Then, the task scheduler 23 in TP1 executes the tasks in TP1 according to the priority (S16).

The safety monitoring task 24 executed in TP1 monitors the execution state of the normal control task 26, monitors the input and output data to and from the I/O port 12, and evaluates whether or not they are normal (S 17). When it is evaluated as abnormal as a result of the evaluation (No in S18), the safety monitoring task 24 notifies the partition scheduler 21 of the result (S19).

After a lapse of one Tick, the partition scheduler 21 starts scheduling again (S20). The partition scheduler 21 selects and determines any of TPs to be activated in the next one Tick according to the scheduling pattern, and when TP to be activated next is not changed (No in S21), the flow returns to S15 and continues the operation for TP1.

When TP to be activated next is changed (Yes in S21), the partition scheduler 21 further evaluates whether or not TPX is normal in response to the notified result from TP1 in S19 (S22). When there is an abnormality as a result of the evaluation (No in S22), the partition scheduler 21 selects and determines TP3 as TP to be activated in the next one Tick (S23).

When it is normal as a result of the evaluation (Yes in S22), the partition scheduler 21 selects and determines TPX other than TP1 and TP3 as TP to be activated in the next one Tick (S24).

A specific example of the partition scheduling is explained as for the process shown in Fig. 6.
First, a case is explained in which the scheduling is started in S11 according to the normal control scheduling pattern exemplified in Fig. 5A. In this case, it is started as TPX=TP2 in S11, and remains as TPX=TP2 from S12 to S 14. Then, a changed is made from TP2 to TP1 in S15, and TP1 remains from S15 to S21. When the execution state (data input and output) regarding TP2 is evaluated as normal in S 1 8, it is TPX=TP2 in S24 (i.e. the normal control scheduling pattern that started from TP2 continues). On the other hand, when the execution state (data input and output) regarding TP2 is evaluated as abnormal in S18, it is TPX=TP3 in S23 (i.e. switched to the safety control scheduling pattern that starts from TP3).

Moreover, a case is explained in which the scheduling is started in S11 according to the safety control scheduling pattern exemplified in Fig. 5B. In this case, in S11, it started as TPX=TP3 in S11 and remains as TPX=TP3 from S12 to S 14. Then, a change is made from TP3 to TP1 in S15 and TP1 remains from S15 to S21. When the execution state (data input and output) regarding TP3 is evaluated as normal in S18, it is TPX=TP2 in S24 (i.e. switched to the normal control scheduling pattern that started from TP2). On the other hand, when the execution state (data input and output) regarding TP3 is evaluated as abnormal in S18, it is TPX=TP3 in S23 (i.e. the safety control scheduling pattern that starts from TP3 continues).

Note that although the aforementioned example explained the case of combining only three TPs (TP1 for safety monitoring, TP2 for normal control, and TP3 for safety control) as the scheduling pattern, there may be a plurality of partitions for normal control like TP2 and a plurality of partitions for safety control like TP3. For example, there are two TP2 and TP4 for normal control, TP1 for safety monitoring, two TP3 and TP5 for safety control, and these five TPs (TP1 to TP5) may be combined to form the scheduling pattern. In this case, in S23, the partition scheduler 21 may evaluate the type of the abnormality state of the execution state (data input and output) regarding TPX and may select one of TP3 and TP5 for safety control according to the abnormality type. Further, one of TP2 and TP4 for normal control may be selected in S24.

As mentioned above, in this embodiment, the OS 100 includes the partition scheduler 21 that selects and determines the partition to be activated next in response to the notice from TP1 for safety monitoring or the notice from each TP. The partition scheduler 21 operates independently from the task executed in each TP and operates in the predetermined timer period. The following effects can be achieved by the partition scheduler 21 that independently operates in the predetermined timer period and includes the partition scheduling function.

First, in general, there is a request to reduce the execution time of the safety monitoring task 24 as much as possible in order to sufficiently ensure the execution time of the normal control task 26. In the conventional technique (for example, Patent Literature 1), the safety monitoring task 24 selects and determines the scheduling pattern in addition to monitoring of the execution state of the normal control task 26 and monitoring of the input and output data to and from the I/O port 12. Thus, it has been necessary to assign the execution time required for this selection and determination to TP2 to which the safety monitoring task 24 belongs.

Additionally, in order to guarantee ensuring of the functional safety, basically, the safety monitoring task 24 and the normal control task 26 must be executed alternately. Therefore, in the conventional technique, the selection and determination of the scheduling pattern by the safety monitoring task 24 is executed every time upon the execution of the normal control task 26. A total in a plurality of cycles indicates that long execution time is required for the selection and determination of the scheduling pattern by the safety monitoring task 24.

Meanwhile, according to this embodiment, the safety monitoring task 24 itself does not have to execute the selection and determination of the scheduling pattern. Moreover, the execution time required by the partition scheduler 21 for the selection and determination of the scheduling pattern can be managed in a short time. Therefore, as compared to the conventional technique, an effect is achieved in which the assignment to TP1 for safety monitoring can be managed in a short time and longer time can be assigned to TP2 for normal control.

Further, although in the process exemplified in Fig. 6, the partition scheduler 21 selects and determines TP3 for safety control (S23) or selects and determines TP2 for normal control (S24) in response to the result notice from TP1, the present invention is not limited to this. For example, instead of the configuration in which the result is notified to the partition scheduler 21 only from TP1 for safety monitoring, the configuration in which the execution state result is notified to the partition scheduler 21 from each of TP1 to TP3 may be employed and the partition scheduler 21 may select and determine TP3 for safety control in response to the result notice from each TP.

Employing the configuration in which the partition scheduler 21 that operates independently from each TP receives the result notice from all TPs provides integrated understanding of the states regarding all TPs. For this reason, for example, the partition scheduler 21 takes the situation of each TP into consideration based on the result notice from each TP to execute the evaluation such as skipping TP unnecessary to be executed. This achieves an effect that only the time partition not requiring to be executed can be skipped intentionally. In addition, for example, the partition scheduler 21 takes the situation of each TP into consideration based on the result notice from TP1 for safety monitoring to determine and select the next partition only from TP in a normal state. This achieves an effect that more accurate partition scheduling can be realized as compared to the conventional technique.

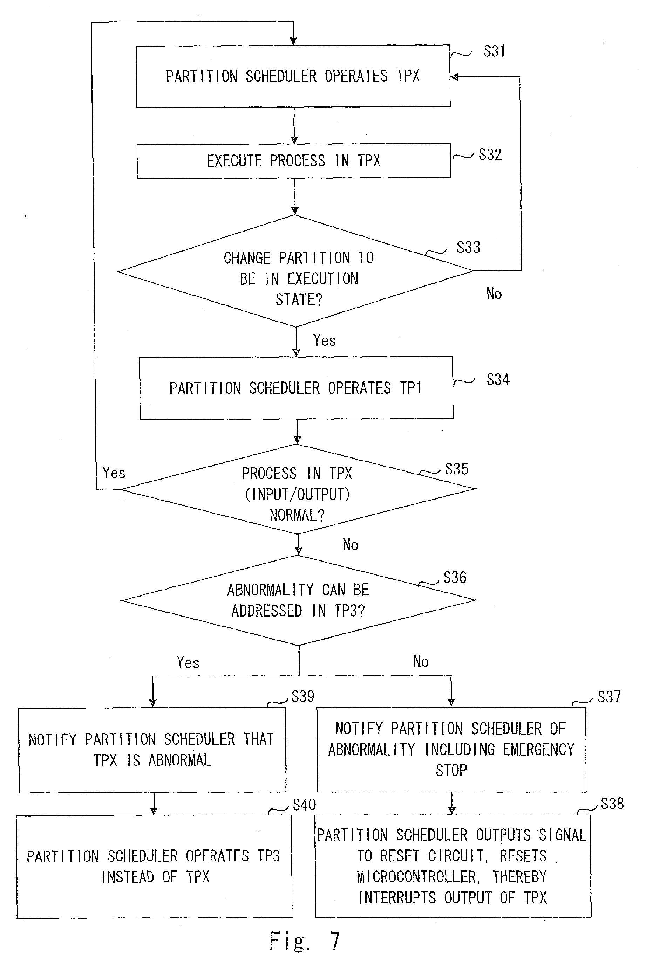

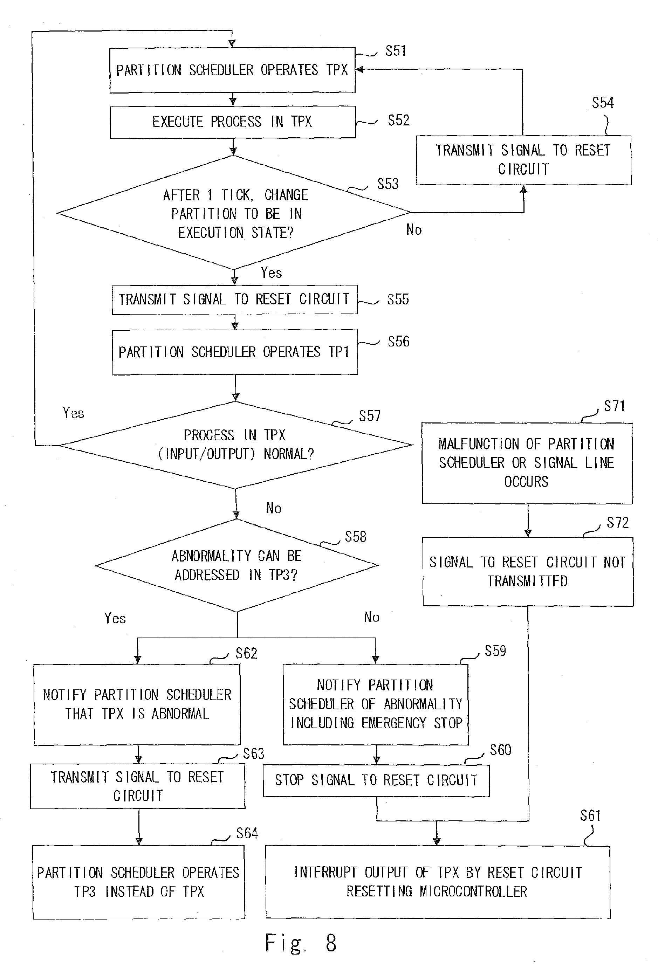

Then, a reset mechanism of the microcontroller 15 using the reset circuit 14 is explained using Figs. 7 and 8. Figs. 7 and 8 are flowcharts showing specific examples of a reset procedure of the microcontroller 15 using the reset circuit 14.

In this embodiment, the partition scheduler 21 that operates by every Tick includes a reset function for the microcontroller 15. Upon detecting the abnormality in the OS 100, the partition scheduler 21 takes measures against the abnormality in conjunction with the reset circuit 14. The reset circuit 14 resets the microcontroller 15 based on the signal from the partition scheduler 21.

First, a specific example of the reset procedure of the microcontroller 15 using the reset circuit 14 is explained using Fig. 7. In the process shown in Fig. 7, when a reset instruction signal is received from the partition scheduler 21, the reset circuit 14 resets the microcontroller 15. Note that in Fig. 7, TPX is TP other than TP1 and TP3.

First, in S31 to S33, the partition scheduler 21 starts the operation of TPX, thereby executing the process regarding TPX until TP to be activated next is changed. Then, after the partition scheduler 21 starts the operation of the task scheduler 23 in TP1 (S34), the safety monitoring task 24 that belongs to TP1 evaluates whether the process regarding TPX (input and output) is normal (S35). When it is normal as a result of the evaluation (Yes in S35), the flow returns to S31 and the operation for the same TPX continues.

When it is abnormal as a result of the evaluation (No in S35), the safety monitoring task 24 belonging to TP1 evaluates whether the abnormality in TPX is an abnormality that can be addressed by the safety control task 28 belonging to TP3 (S36). When the abnormality is not the abnormality that can be addressed in TP3 (No in S36), the safety monitoring task 24 belonging to TP1 notifies the partition scheduler that the abnormality includes an emergency stop (S37). The partition scheduler 21, which received the notice from the safety monitoring task 24 belonging to TP 1 , outputs the reset instruction signal to the reset circuit 14, and the reset circuit 14, which received the reset instruction signal, resets the microcontroller 15 (S38).

When the abnormality can be addressed in TP3 (Yes in S36), the safety monitoring task 24 belonging to TP1 notifies the partition scheduler 21 that TPX is abnormal (S39). The partition scheduler 21, which received the notice from TP1, switches TPX to TP3 (S40).

Next, another specific example of the reset procedure of the microcontroller 15 using the reset circuit 14 is explained using Fig. 8. In the processes shown in Fig. 8, a signal is periodically transmitted from the partition scheduler 21 to the reset circuit 14, and the reset circuit 14 resets the microcontroller 15, when the transmission signal from the partition scheduler 21 is interrupted. Note that in Fig. 8, TPX is TP other than TP1 and TP3.

As compared to the processes from S31 to S35 in Fig. 7, there is a difference that it is clarified in S53 of Fig. 8 that the partition scheduler 21 operates by every Tick and the partition scheduler 21 periodically transmits signals to the reset circuit 14 in S54 and S55. Other processes from S51 to S57 shown in Fig. 8 are basically same as the processes from S31 to S35 shown in Fig. 7.

Moreover, as compared to the processes from S36 to S40 in Fig. 7, it is different in S60 of Fig. 8 that the partition scheduler 21 stops the transmission signal to the reset circuit 14, and in S63, the partition scheduler 21 transmits the signal to the reset circuit 14. Further, it is different that in S61 of Fig. 8, the reset circuit 14 resets the microcontroller 15 in response to the interruption of the transmission signal from the partition scheduler 21. Other processes from S58 to S64 shown in Fig. 8 are basically same as the processes from S36 to S40 shown in Fig. 7.

Furthermore, as shown in S71 and S72 of Fig. 8, when a malfunction occurs in the partition scheduler 21 or when a malfunction occurs in a signal line from the partition scheduler 21 to the reset circuit 14 in parallel to the processes from S51 to S64, the transmission signal is not transmitted from the partition scheduler 21 to the reset circuit 14. Also in this case, the reset circuit resets the microcontroller 15 in response to the interruption of the transmission signal from the partition scheduler 21 (S61).

According to the processes shown in Fig. 8, the microcontroller 15 can be surely reset not only in the case of intentionally issuing a reset instruction from the partition scheduler 21 to the reset circuit 14, but also in the case when the partition scheduler 21 itself does not normally operate due to some cause or the case when a malfunction occurs in the signal line that transmits the transmission signal from the partition scheduler 21 to the reset circuit 14. Moreover, normal execution of TP switching by one Tick can also be guaranteed at the same time.

Note that in Figs. 7 and 8, although the partition scheduler 21 is explained to output the reset instruction signal to the reset circuit 14 or stop the transmission signal to the reset circuit 14 in response to the result notice from TP1, the partition scheduler 21 may output the reset instruction signal to the reset circuit 14 or stop the transmission signal to the reset signal 14 in response to the result notice from one of TP1 to TP3.

### <Second embodiment of the invention>

The safety control device according to this embodiment is a modification of the safety control device 1 mentioned above. The entire configuration of the safety control device according to this embodiment may be similar to the configuration of the safety control device 1 shown in Fig. 1. Moreover, a task execution environment provided by an OS included in the safety control device may have a similar configuration as the task execution environment shown in Fig. 4.

This embodiment is characterized in that the partition scheduler 21 changes an operating frequency of the microcontroller 15 according to the execution time required by the task in the time partition.

Note that although the operating frequency of the microcontroller 15 and a duty cycle of the partition scheduler 21 (by one Tick) are both determined based on the clock signal from a same external clock source, when the operating frequency of the microcontroller 15 is changed, only the operating frequency of the microcontroller 15 may be independently changed. Alternatively, assume that the operating frequency of the microcontroller 15 is synchronized with the duty cycle of the partition scheduler 21 (by one Tick), the changed operating frequency of the microcontroller 15 may be obtained using a predetermined arithmetic expression in order to achieve consistency between one Tick time in which the partition scheduler 21 operates, the number of assigning Ticks, and the execution time and the changed operating frequency of the microcontroller 15.

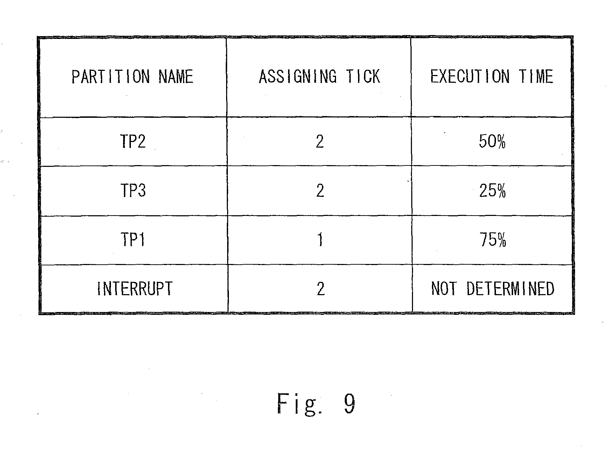

Next, the processes by the safety control device 1 according to this embodiment are explained in more detail using Figs. 9 and 10. In this embodiment, the partition scheduler 21 holds an execution table (for example, Fig. 9). Then, the partition scheduler 21 refers to the execution table and changes the operating frequency of the microcontroller 15 according to the execution time required by the task in the time partition. Note that the execution table should be referable by the partition scheduler 21, and the partition scheduler 21 may be hold the execution table or the OS 100 holds the execution table independently from the partition scheduler 21.

Fig. 9 shows a specific example of the execution table. Time partition names are set to the columns of a partition name. The number of Ticks to be assigned to each time partition is set to the columns of an assigning Ticks. The proportion of the execution time required by the task for actual execution in the execution time assigned to each time partition is set to the columns of execution time. Note that appropriate values are previously set by a user to these settings in the execution table.

Fig. 10 is a flowchart showing a specific example of a procedure of the partition scheduler 21 according to this embodiment.
First, the partition scheduler 21 operating by every Tick schedules the time partitions according to the scheduling pattern (S81).

The partition scheduler 21 refers to the execution table for the next time partition scheduled in S81 (S82). The partition scheduler 21 refers to the execution table and obtains the assigning Ticks and the execution time for the next time partition.

The partition scheduler 21 evaluates whether the next partition is a time partition dedicated for interrupt handling (S83). When it is not the time partition dedicated for interrupt handling (No in S84), the partition scheduler 21 reduces the operating frequency of the microcontroller 15 based on the execution time regarding the next time partition (S85). Specifically, for example the microcontroller 15 includes a register for setting the operating frequency thereof. When the partition scheduler 21 sets a value of the operation frequency to be changed to the register, the operating frequency of the microcontroller 15 can be changed.

In order to reduce the operating frequency of the microcontroller 15 to the lowest, the time assigned to the time partition is used 100% to reduce the operating frequency to the extent to execute the task. For example, when the execution time set to the execution table is 50%, the operating frequency of the microcontroller 15 can be reduced to 50% of the operating frequency in the lowest case.

The partition scheduler 21 can reduce the operating frequency regarding TP2 to 50% (1/2) of the operating frequency upon referring to the execution table shown in Fig. 9, for example. In this case, since the execution processing speed of the task in TP2 is 50%, the task actually executed in TP2 is executed over twice the time. As a result, as if the execution time of the task actually executed in TP2 is executed in the time corresponding to two Ticks, which has originally been the execution time corresponding to one Tick (50% of two Ticks assigned). Accordingly, unnecessary processes will not be executed at all in TP2. That is, the time assigned to TP2 is used 100% to execute the task. Further, TP1 can be reduced to 75% (3/4) of the operating frequency.

Moreover, when the operating frequency is reduced, instead of using to execute all the Tick time assigned to each TP, when the microcontroller 15 is operated based on the reduced operating frequency, the operating frequency of the microcontroller 15 may be reduced so that the execution time by the task for the time assigned to the time partition falls within a predetermined proportion of the time assigned to the time partition. Specifically, the operating frequency of the microcontroller 15 may be reduced so that X% of the assigned Tick time can be used for execution. For example, with the setting of X=80, the operating frequency of the microcontroller 15 is reduced so that 80% of the assigned Tick time is used for execution. Then, even when the operating frequency is reduced, remaining 20% time can be used and interrupt handling suddenly generated in the same time partition can be processed in this remaining time.

Returning to Fig. 10, the explanation is continued. When the next time partition is a time partition dedicated for interrupt handling (Yes in S84), the time scheduler 21 evaluates whether or not the interrupt handling to be processed exists in the next time partition (S86). When the interrupt handling that should be processed does not exist (No in S85), the partition scheduler 21 reduces the operating frequency of the microcontroller 15 to a predetermined operating frequency based on the execution time regarding the next time partition (S87).

When the interrupt handling that should be processed exists in the time partition dedicated for interrupt handling (Yes in S85), the partition scheduler 21 executes the interrupt handling first. The partition scheduler 21 reduces the operating frequency of the microcontroller 15 to the predetermined operating frequency, when execution of the interrupt handling is completed and time is left in the same time partition (S88). Specifically, for example, the partition scheduler 21 evaluates completion of the interrupt handling by detecting that the interrupt handling is completed or stopped, and when the interrupt handling is completed, subtracting the number of elapsed Ticks till the interrupt handling completion from the number of Ticks assigned to the time partition dedicated for interrupt handling allows evaluation of whether there are remaining Ticks (i.e. whether there is time left).

Note that in S87 and S88, since the interrupt handling that should be processed does not exist or interrupt handling is completed in the time partition dedicated for interrupt handling, the operating frequency of the microcontroller 15 is reduced to the predetermined operating frequency. An appropriate value is previously set to the predetermined operating frequency by the user and may be the lowest operating frequency in the range not influencing the control of the system.

In S85, S87, and S88, when the operating frequency of the microcontroller 15 is reduced, the task is executed by the processor 10 that operates at the reduced operating frequency. Then, after a lapse of one Tick, the flow returns to S81 to continue the process, and the next time partition is scheduled. Then, from S83 to S88, the operating frequency of the microcontroller 15 that should be changed is determined based on the execution time regarding the next time partition and changed to the determined operating frequency.

According to this embodiment explained above, the execution time of the task actually required in the partition is known beforehand. Therefore, the partition scheduler 21 refers to the execution table set with necessary execution time and suppresses the processing speed of the microcontroller 15 so that the assigned time to each partition is used with least waste as possible to proceed with the execution of the task. This suppresses the power consumption.

Further, the present invention is not limited only to the aforementioned embodiments, and it is needless to say that various modifications can be made in the range not departing from the already mentioned scope of the present invention. For example, each of the aforementioned embodiments may be enforced and a plurality of embodiments may be combined and carried out.

### Reference Signs List

- 1: SAFETY CONTROL DEVICE
- 10: PROCESSOR.
- 11: EXECUTION MEMORY
- 12: I/O PORT
- 13: NON-VOLATILE MEMORY
- 14: RESET CIRCUIT
- 15: MICROCONTROLLER
- 21: PARTITION SCHEDULER
- 22: SCHEDULING TABLE
- 23, 25, and 27: TASK SCHEDULER
- 24: SAFETY MONITORING TASK
- 26: NORMAL CONTROL TASK
- 28: SAFETY CONTROL TASK
- 100: OPERATING SYSTEM
- 101: SAFETY MONITORING APPLICATION
- 102: NORMAL CONTROL APPLICATION
- 103: SAFETY CONTROL APPLICATION

## Claims

1. A safety control device comprising:
a hardware resource including at least one processor; and
a system program that controls assignment of execution time of the processor to a program, wherein
the system program includes, in part, a partition scheduler that selects and determines a time partition to be scheduled next according to a scheduling pattern including the time partition for assigning the execution time to the program,
the processor periodically operates the partition scheduler by executing the system program, and
the partition scheduler reduces an operating frequency of the hardware resource according to a proportion occupied by the execution time required by the program for execution in the time partition.

2. The safety control device according to Claim 1, wherein
the system program includes, in part, an execution table that specifies beforehand for each time partition the proportion occupied by the execution time required by the program for execution in the time partition, and
the partition scheduler refers to the execution table to reduce the operating frequency of the hardware resource.

3. The safety control device according to Claim 1 or 2, wherein when the hardware resource is operated based on the reduced operating frequency, the partition scheduler reduces the operating frequency of the hardware resource so that the execution time by the program falls within a predetermined proportion of the time assigned to the time partition.

4. The safety control device according to one of Claims 1 to 3,
wherein
the scheduling pattern further includes a time partition dedicated for interrupt handling that assigns the execution time to a interrupt handling program, and
the partition scheduler selects and determines the time partition to be scheduled next according to the scheduling pattern including the time partition dedicated for interrupt handling and does not change the operating frequency of the hardware resource when the interrupt handling program is executed in the time partition dedicated for interrupt handling.

5. The safety control device according to Claim 4, wherein the partition scheduler reduces the operating frequency of the hardware resource when the execution of the interrupt handling program in the time partition dedicated for interrupt handling is completed.

6. The safety control device according to one of Claims 1 to 3,
wherein
the scheduling pattern further includes a time partition dedicated for interrupt handling that assigns the execution time to an interrupt handling program, and
the partition scheduler selects and determines the time partition to be scheduled next according to the scheduling pattern including the time partition dedicated for interrupt handling and reduces the operating frequency of the hardware resource when the interrupt handling program is not executed in the time partition dedicated for interrupt handling.

7. The safety control device according to Claim 5 or 6, wherein the partition scheduler reduces the operating frequency of the hardware resource to a predetermined operating frequency.

8. A safety control method for a control target comprising:
a step for periodically operating to cause a processor to select and determine a time partition to be scheduled next according to a scheduling pattern including the time partition that assigns execution time of the processor to a program; and
a step for operating to cause the processor to reduce an operating frequency of a hardware resource including the processor according to a proportion occupied by the execution time required by the program for execution in the time partition.

9. The safety control method according to Claim 8, wherein the operation is performed to cause the processor to refer to an execution table that specifies beforehand for each time partition the proportion occupied by the execution time required by the program for execution in the time partition and reduce the operating frequency of the hardware resource.

10. The safety control method according to Claim 8 or 9,
wherein when the hardware resource is operated based on the reduced operating frequency, the operation is performed to cause the processor to reduce the operating frequency of the hardware resource so that the execution time by the program falls within a predetermined proportion of the time assigned to the time partition.

11. The safety control method according to one of Claims 8 to 10, wherein
the scheduling pattern further includes a time partition dedicated for interrupt handling that assigns the execution time to an interruption handling program, and
the safety control method selects and determines the time partition to be scheduled next according to the scheduling pattern including the time partition dedicated for interrupt handling and does not change the operating frequency of the hardware resource by the processor when the interrupt handling program is executed in the time partition dedicated for interruption handling.

12. The safety control method according to Claim 11, further comprising a step for operating to cause the processor to reduce the operating frequency of the hardware resource when the execution of the interrupt handling program in the time partition dedicated for interrupt handling is completed.

13. The safety control method according to one of Claims 8 to 10, wherein
the scheduling pattern further includes a time partition dedicated for interrupt handling that assigns the execution time to an interrupt handling program, and
the safety control method selects and determines the time partition to be scheduled next according to the scheduling pattern including the time partition dedicated for interrupt handling and reduces the operating frequency of the hardware resource when the interrupt handling program is not executed in the time partition dedicated for interrupt handling.

14. The safety control method according to Claim 12 or 13,
wherein the operation is performed to cause the processor to reduce the operating frequency of the hardware resource to a predetermined operating frequency.
